**Europäisches Patentamt**

**European Patent Office**

**Office européen des brevets**

(19)

(11) Veröffentlichungsnummer: **0 383 109 B1**

# EUROPÄISCHE PATENTSCHRIFT

(12)

(45) Veröffentlichungstag der Patentschrift: **16.02.94**

(51) Int. Cl.5: **C02F 1/28**, E02D 31/00

(21) Anmeldenummer: **90102036.2**

(22) Anmeldetag: **02.02.90**

(54) **Verwendung von Rindenmulch zur Verminderung des Nitratgehalts im Grund- und Trinkwasser oder Oberflächenwasser.**

(30) Priorität: **16.02.89 DE 3904652**

(43) Veröffentlichungstag der Anmeldung:
**22.08.90 Patentblatt 90/34**

(45) Bekanntmachung des Hinweises auf die Patenterteilung:
**16.02.94 Patentblatt 94/07**

(84) Benannte Vertragsstaaten:
**AT BE CH DE DK ES FR GB GR IT LI LU NL SE**

(56) Entgegenhaltungen:
**EP-A- 0 292 941**
**DE-A- 3 400 297**
**NL-A- 8 401 772**

**Journal Environ. Oual., 1975, Vol. 4, no. 3, Seiten 388-393**

(73) Patentinhaber: **Behrens, Wolfgang**
**Trespenmoor 25**
**D-27243 Gross Ippener(DE)**

(72) Erfinder: **Behrens, Wolfgang**
**Trespenmoor 25**
**D-27243 Gross Ippener(DE)**

(74) Vertreter: **Thömen, Uwe, Dipl.-Ing.**
**Patentanwalt U. Thömen**
**Zeppelinstrasse 5**
**D-30175 Hannover (DE)**

**Beschreibung**

Die Erfindung betrifft die Verwendung von Rindenmulch zur Verminderung des Nitratgehalts im Grund- und Trinkwasser oder Oberflächenwasser durch Reduzierung der Stickstoff (N)-Auswaschung in das Wasser.

Die starke Belastung von Wasser, insbesondere von Trinkwasser, mit Nitrat stellt sich schon seit längerer Zeit als ein gravierendes Problem dar. Aus Gründen des Umweltschutzes und um gesundheitliche Schäden zu vermeiden wird deshalb angestrebt, die Grenzwerte für die Belastung von Trinkwasser mit Nitrat auf minimale Werte herabzusetzen.

Wesentliche Ursachen für die Belastung des Trinkwassers mit Nitrat sind die Verwendung von Stickstoff-Düngemitteln sowie die Ausbringung von Gülle bei landwirtschaftlichen Betrieben. Die Gülle enthält in hohem Maße Stickstoffverbindungen ($NH_4^+$ -Stickstoff), und durch Auswaschung von Stickstoff in Form von Nitrat erfolgt ein Eintrag des Nitrats in das Grundwasser, welches zur Gewinnung von Trinkwasser herangezogen wird.

Somit ist die Landwirtschaft mit der Stickstoffdüngung und vor allem auch mit der Ausbringung von Gülle ein Hauptverursacher des hohen Nitrateintrages in das Grundwasser, und in Kenntnis dieser Problematik sind vom Gesetzgeber Verfügungen in Form von "Gülle-Verordnungen" erlassen worden, welche die Ausbringung von Gülle ab einem bestimmten Zeitpunkt für einen längeren Zeitraum untersagen. So ist es beispielsweise in Niedersachsen nicht erlaubt, ab dem 01. November noch Gülle auf die landwirtschaftlichen Flächen auszubringen. Solche Verordnungen führen aber dazu, daß der Landwirt die angefallene Gülle bis kurz vor dem Verbotstermin vollständig ausbringt, mit der Folge, daß die Nitratbelastung dann besonders stark ansteigt.

Grundsätzlich ist zwischen der Pflanzenwachsperiode (Frühjahr bis Herbst) und der wachstumsfreien Periode (Herbst bis Frühjahr, also Zeitraum nach der Ernte) zu unterscheiden. In der Pflanzenwachstumsperiode wird der Stickstoff von den Pflanzen zum Wachstum benötigt und somit gebunden, d.h., in der Wachstumsperiode ist die Gefahr einer Nitratbelastung des Grundwassers durch Auswaschung von Stickstoff in Form von Nitrat nur sehr gering und lediglich im Fall einer Überdüngung gegeben.

Kritischer ist demgegenüber die wachstumsfreie Periode nach der Ernte, wenn also keine Pflanzen mehr vorhanden sind, die den vor allem durch die Gülle ausgebrachten Stickstoff binden könnten.

Um dieser Problematik zu begegnen, ist schon der Anbau von sogenannten Zwischenfrüchten vorgeschlagen worden, um eine Nitratauswaschung in der wachstumsfreien Periode zumindest zu verringern. In der Zeitschrift "gwf-Wasser, Abwasser" Nr. 7/88 wird allerdings darauf hingewiesen, daß der Anbau von Zwischenfrüchten in trockenen Jahren oder trockenen Gegenden oder auch bei späten Getreideerntetermin nur eingeschränkt möglich ist. Ferner sind die begrenzten Möglichkeiten eines Zwischenfruchtanbaus im Gemüse- und Weinanbaugebieten zu berücksichtigen. In der Praxis hat sich deshalb auch die Maßnahme des Anbaus von Zwischenfrüchten nicht bewähren können, um die Belastung von Grundwasser mit Nitrat entscheidend zu verringern.

Bisher hat man sich somit auf eine starke Belastung des Wassers mit Nitrat eingestellt und diese als notwendigerweise gegeben hingenommen. Die Maßnahmen zur Verminderung des Nitratgehaltes auf gerade noch zulässige Werte sind stets darauf gerichtet gewesen, das schon mit Nitrat belastete Wasser durch Filter soweit wie möglich zu reinigen. Diese Maßnahmen zur Aufbereitung und Reinigung von Trinkwasser sind allerdings mit einem hohen Aufwand sowohl an Reinigungsvorrichtungen als auch an Kosten verbunden.

Der Erfindung liegt die Aufgabe zugrunde, den Nitratgehalt im Grund- und Trinkwasser oder Oberflächenwasser zu Vermindern und, die Belastung des Wassers durch Nitrat weitgehend zu reduzieren, so daß aufwendige Maßnahmen zur Filterung des Wassers nicht mehr erforderlich sind.

Dieses Ziel erreicht die Erfindung durch die Merkmale des Patentanspruchs 1.

Bei der Erfindung wird Rindenmulch verwendet, der in den Erdboden eingebracht wird. Vorzugsweise erfolgt die Einbringung des Rindenhumus zu Beginn der wachstumsfreien Periode bzw. bevor der Landwirt in üblicher Weise die Gülle auf das Feld ausbringt.

Rindenmulch hat bekanntlich die Eigenschaft, Stickstoff organisch zu binden. Organischer Stickstoff ist aber nicht mineralisiert und kann deshalb auch nicht ausgewaschen werden. Diese Eigenschaft ist in J. Environ. Qual. Vol. 4, No. 3, 1975, Seiten 388-393 beschrieben.

Im Vergleich zu den bekannten Verfahren, das bereits mit Nitrat belastete Wasser mittels mechanischer Filter zu reinigen, beschreitet die Erfindung einen Lösungsweg, der darauf abzielt, ursächlich schon dafür Sorge zu tragen, daß eine Belastung des Wassers mit Nitrat überhaupt nicht stattfindet und somit die aufwendigen Filterungsmaßnahmen nicht mehr erforderlich sind. Die Erfindung setzt nämlich direkt an der Ursache des Problems an, indem die Stickstoffverbindungen in der wachstumsfreien Periode gebunden werden, wodurch eine Auswaschung und eine mögliche Belastung des Wassers durch Nitrat verhindert wird.

Es ist zwar an sich bekannt, daß Rindenmulch die Eigenschaft besitzt, $NH_4^+$-Stickstoff zu binden, dennoch wurde diese Kenntnis bisher nicht im Sinne einer Verminderung des Nitratgehaltes in Wasser ausgenutzt. Die Verwendung von Rindenmulch erfolgte lediglich zum Zwecke einer Unkrautbekämpfung, wobei der Rindenmulch auf der Oberfläche des Erdbodens ausgestreut worden ist. Der lose auf dem Erdboden liegende Rindenmulch absorbiert den für Pflanzen zum Wachstum erforderlichen Stickstoff, so daß sich der durch äußere Einwirkungen, insbesondere durch Wind auf die Rindenmulchschicht gelangende Samen von Unkraut wegen des Stickstoffmangels nicht entfalten kann, weil der Samen keine Ernährungsgrundlage vorfindet.

Bei der beschriebenen Verwendung einer auf dem Erdboden aufgebrachten Schicht von Rindenmulch sehen im übrigen die Richtlinien der "Deutschen Rinden-Gütegemeinschaft" ausdrücklich vor, bei dem verwendeten Rindenmulch ausschließlich Körnungen bzw. eine Fraktion von größer als 20 mm zu verwenden, also auf Feinanteile von Rindenmulch zu verzichten.

Diese Richtlinien sind erlassen worden, weil Rindenmulch mit kleinerer Fraktion bzw. kleinerer Körnung als 20 mm mit dem natürlichen Niederschlag durch Regen in den Erdboden eindringen können und dann bei den obererdischen anderen Pflanzen einen Nitrat-Entzug verursachen, mit der Wirkung, daß diese Pflanzen absterben. Es ist also hervorzuheben, daß sich die Verwendung von Rindenmulch bisher ausdrücklich darauf beschränkt hat, den Rindenmulch auf den Erdboden aufzubringen, um die Bildung von Unkraut zu verhindern, und daß ein Eindringen von Rindenmulch in den Erdboden ausdrücklich nicht gewollt ist, weil dadurch den anderen oberirdischen Pflanzen die Ernährungsgrundlage entzogen wird, wenn der Rindenmulch den Stickstoff im Erdboden absorbiert.

Durch die Bindung von Stickstoff wird eine mögliche Auswaschung und damit eine Belastung des Grundwassers durch Nitrat verhindert. Gleichwohl steht der für das Pflanzenwachstum benötigte Stickstoff den Pflanzen am Ende der wachstumsfreien Periode und zu Beginn der Pflanzenwachstumsperiode wieder zur Verfügung. Der Stickstoff wird lediglich während der wachstumsfreien Periode in nicht pflanzenverfügbarer Form gebunden.

Der Rindenmulch selbst wirkt als organische Substanz Stickstoff (N) bindend. Bakterien, welche die organische Substanz des Rindenmulches abbauen, finden normalerweise nicht genügend Stickstoff vor, um körpereigenes Eiweiß aufzubauen. Die Bakterien entziehen daher der Umgebung Stickstoff und speichern ihn organisch. Bei Bodentemperaturen von kleiner als etwa 3° C erfolgt keine bakterielle Tätigkeit mehr, der Stickstoff bleibt also in der wachstumsfreien Zeit im Herbst und im Winter wegen der Immobilisationswirkung des Rindenmulches gebunden. Der immobilisierte Stickstoff kann aber nicht ausgewaschen werden. Der aufgrund der Sogwirkung des in den Erdboden eingebrachten Rindenmulches immobilisierte Stickstoff kann nicht in das Grundwasser gelangen.

Bei wärmeren Temperaturen von etwa 3° C - 5° C und mehr findet im Erdboden eine Fermentierung des Rindenmulches statt. Dabei erhöht sich der Stickstoffgehalt im Rindenmulch, und der Stickstoff, der den Winter über gespeichert war, steht den Pflanzen bei wärmeren Temperaturen zu Beginn der Wachstumsperiode wieder zur Verfügung.

Der Kern der Erfindung besteht demnach in der Maßnahme, den Stickstoff in der wachstumsfreien Zeit zu speichern, wobei aufgrund der Immobilisationswirkung des Mulches ein Auswaschen von Stickstoff in Form von Nitrat verhindert wird, und den Stickstoff nach Ende der wachstumsfreien Periode wieder für das dann beginnende Pflanzenwachstum zur Verfügung zu stellen.

In zweckmäßiger Ausgestaltung der Erfindung wird der Rindenmulch in Form einer etwa waagerechten Schicht in den Erdboden eingebracht. Dadurch lassen sich große Flächen des Erdbodens erfassen, wobei es möglich ist, auf diese großen Flächen, z.B. Felder, nachträglich noch Gülle aufzubringen, ohne daß hier besondere Zeitpunkte zu beachten sind. Die in der Gülle enthaltenen Stickstoffverbindungen werden nämlich in der voranstehend beschriebenen Weise gebunden, so daß die Ausbringung der Gülle zu keiner schädlichen Belastung von Trinkwasser mit Nitrat führt.

Nach einer anderen vorteilhaften Ausgestaltung der Erfindung ist vorgesehen, daß der Rindenmulch in Form einer sich etwa senkrecht in den Erdboden erstreckenden Schicht eingebracht wird.

Diese Maßnahme ist besonders im Bereich von Teichen und Seen angebracht. Die sich senkrecht in den Erdboden erstreckende Schicht von Rindenmulch bildet praktisch um das Gewässer herum einen Schutzschild, durch den verhindert wird, daß Stickstoff in das Gewässer gelangen kann.

In zweckmäßiger Ausgestaltung der Erfindung wird ein Rindenmulchgemisch mit solchen Substanzen verwendet, welche eine Bindung von Stickstoffverbindungen fördern. Zum Beispiel Tongranulat und/oder Lava sind hier besonders geeignet.

Tongranulat bzw. Tonmehl unterstützt die $NH_4^+$-Fixierung, wodurch eine Nitrat-Auswaschung noch mehr unterbunden wird.

Die Zugabe von Lava, also die Zugabe einer offenporigen Substanz mit wasserspeichernden Eigenschaften ist geeignet, die Absinkgeschwindigkeit von Wasser in den Boden erheblich zu verringern. Wenn sich absinkendes und mit Stickstoffverbindungen behaftetes Wasser somit länger im Bereich der Schicht des in den Erdboden eingebrachten Rindenmulchgemisches aufhalten kann, ist gewährleistet, daß viel Stickstoff gebunden wird.

Im übrigen trägt die Verwendung von Lava zu einer Strukturstabilität des Rindenmulchgemisches bei, welches somit in vorteilhafter Weise auch als Unterlage für befestigte Gehwege dienen kann.

Solche Gehwege lassen sich beispielsweise um natürliche oder künstliche Gewässer herum zum Wandern anlegen, wobei dann gleichzeitig die Gefahr einer Nitratauswaschung in das Gewässer vermindert wird, insbesondere, wenn zusätzlich eine Rindenmulchschicht bzw. eine Schicht aus einem Rindenmulchgemisch senkrecht nach Art eines Schutzgürtels in den Erdboden eingebracht wird.

Gemäß einer weiteren vorteilhaften Ausführungsform der Erfindung wird Rindenmulch in den Korngrößen von kleiner als 20 mm verwendet.

Durch diese kleine Körnung wird insgesamt die Oberfläche des Rindenmulchs vergrößert, wobei die Verwendung einer solchen Körnung im Gegensatz zu den bisherigen Empfehlungen nach den Richtlinien der "Deutschen Rinden-Gütegemeinschaft" steht. Durch die vergrößerten Oberflächen wird die mit dem Rindenmulch im Sinne der Erfindung angestrebte Wirkung noch erhöht, und außerdem läßt sich der feinkörnige Rindenmulch auch leichter in den Erdboden einbringen bzw. mit dem Erdboden vermischen.

Weitere zweckmäßige Ausgestaltungen und vorteilhafte Weiterbildungen der Erfindung ergeben sich aus den Unteransprüchen und der nachfolgenden Beschreibung sowie der Zeichnung.

Zum besseren Verständnis wird die Erfindung beispielhaft anhand der Zeichnungen näher erläutert. Es zeigen:

Fig. 1    eine schematische Querschnittsansicht eines Erdbodens mit einer in den Erdboden eingebrachten Rindenmulchschicht,

Fig. 2    eine andere Querschnittsansicht eines Erdbodens mit zwei senkrecht in den Erdboden eingebrachten Rindenmulchschichten, und

Fig. 3    eine andere Querschnittsansicht eines Erdbodens in weiterer Ausgestaltung der Erfindung, wobei zusammen mit einer Rindenmulchschicht ein Gehweg gebildet wird.

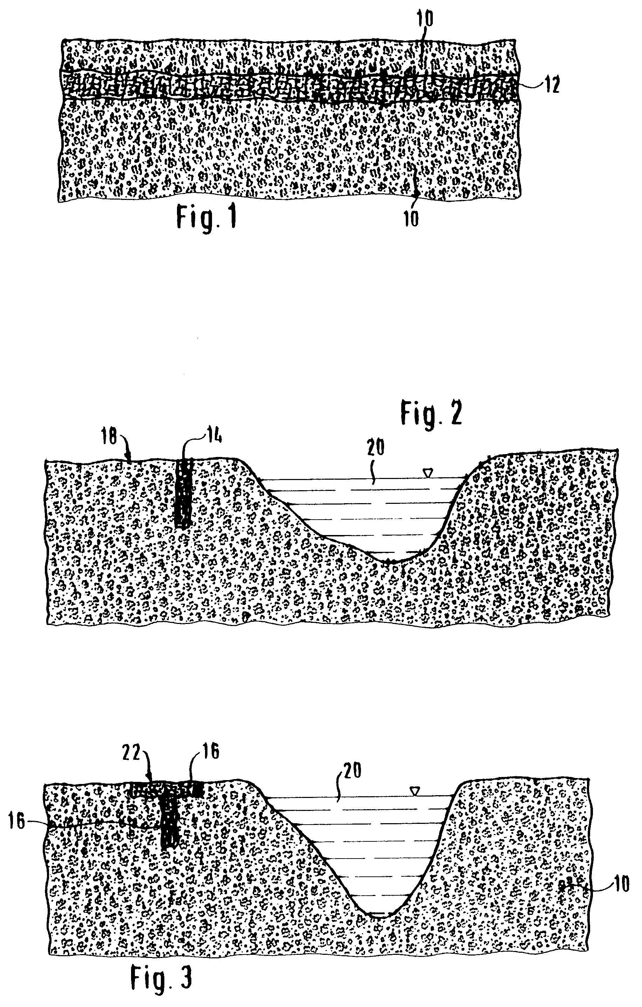

In Fig. 1 ist schematisch ein Querschnitt eines Erdbodens 10 dargestellt, in welchen Rindenmulch 12 oder ein Rindenmulchgemisch eingebracht ist. Zunächst wird der Rindenmulch auf den Erdboden 10 ausgebracht und dann mit an sich bekannten Maßnahmen, z.B. durch Grubbern, in den Erdboden 10 eingebracht.

Die dargestellten Schichten in Fig. 1 sind idealisiert dargestellt, denn tatsächlich wird sich beim Einbringen der Rindenmulch 12 in den Erdboden 10 eine gewisse Vermengung einstellen, so daß sich insgesamt eine obere mit Rindenmulch 12 vermischte Bodenschicht ergibt.

Wenn auf den soweit vorbereiteten Erdboden 10 Gülle ausgebracht wird, erfolgt eine Immobilisierung des Stickstoffs, d.h., die Stickstoffverbindungen werden durch den Rindenmulch 12 organisch gebunden.

Während des Winters bei Temperaturen von etwa kleiner als 3° C unterbleibt jegliche bakterielle Tätigkeit im Boden, so daß der Stickstoff organisch gebunden bleibt.

Bei wärmeren Temperaturen, zu Beginn der Wachstumsperiode im Frühjahr, findet eine Fermentierung statt. Dabei erhöht sich der Stickstoffgehalt im Rindenmulch, und durch Mobilisierung und Nitrifikation und durch Humifizierung des Rindenmulchs wird ein Ausgleich der Stickstoffbilanz herbeigeführt, wobei der Stickstoff den Pflanzen für ihr Wachstum wieder zur Verfügung steht.

Dieser Stickstoff war jedoch in der vorangegangenen wachstumsfreien Periode durch den Rindenmulch 12 gespeichert. Trotz der Ausbringung von Gülle ist dadurch verhindert worden, daß Nitrat in das Grundwasser gelangen kann. Erst zu Beginn der Wachstumsperiode sind die Stickstoffverbindungen wieder pflanzenverfügbar und werden dann durch die Pflanzen selbst aufgebraucht, so daß dann ebenfalls keine Gefahr einer Auswaschung besteht.

Fig. 2 zeigt in schematischer Ansicht einen Querschnitt eines Erdbodens 10 mit einem See 20, welcher einem Feld 18 benachbart ist. Um eine Stickstoffauswaschung in Form von Nitrat in den See 20 zu verhindern, ist senkrecht in den Erdboden 10 ein Rindenmulchgemisch 14 eingebracht, welches wie ein Schutzgürtel um den See 20 wirkt.

Durch die senkrechte Rindenmulchschicht 14 wird in der zuvor beschriebenen Weise Stickstoff bzw. Stickstoffverbindungen in der wachstumsfreien Periode gespeichert, und es wird verhindert, daß Nitrat trotz einer Düngung des Feldes 18 und trotz einer Gülleausbringung auf dem Feld 18 in den See 20 gelangen kann.

Bevorzugt wird für die Schichten 12 und 14 ein Rindenmulchgemisch verwendet, welches sich aus Rindenmulch unter Zugabe von Tongranulat und/oder Lava zusammensetzt. Tonminerale zeichnen sich bekanntlich dadurch aus, daß sie $NH_4^+$-Ionen binden. Dies bedeutet eine weitere Minderung der Auswaschung vor allem in Sandböden. Die Lavazusätze bewirken eine wesentliche Minderung der Absinkgeschwindigkeit von Sickerwasser, weil Lava offenporig ausgebildet ist und damit eine wasserspeichernde Eigenschaft besitzt. Das Sickerwasser kann damit nicht so schnell mit seinen Nitratgehalten in tiefere Bereiche des Erdbodens eindringen, in denen die Stickstoffverbindungen nicht mehr durch Rindenmulch oder durch Tonminerale gebunden werden können.

Die Darstellung in Fig. 3 zeigt in Querschnittsansicht wiederum einen See oder einen Teich 20. Ferner ist schematisch angedeutet, daß sich um den See 20 herum ein Gehweg 22 erstreckt. Dieser Gehweg 22 ist durch ein Rindenmulchgemisch aus Rindenmulch, Tongranulat und Lava gebildet und erfüllt die schon beschriebenen vorteilhaften Wirkungen. Dabei erfüllt bei dem Rindenmulchgemisch 16 die Lava neben ihrer wasserspeichernden Eigenschaft noch den Zweck einer Stabilisierung und mechanischen Festigkeit des Gehweges 22.

Unterhalb der Rindenmulchschicht 16 erstreckt sich - vergleichbar der Darstellung in Fig. 2 - eine senkrechte Rindenmulchschicht 16 in den Erdboden, welche hier ebenfalls die Funktion eines Schutzgürtels ausübt. Die Breite der senkrecht nach unten in den Erdboden gerichteten Rindenmulchschicht 16 liegt bei etwa 20 - 30 cm. Die Tiefe der senkrechten Rindenmulchschicht 16 hängt im wesentlichen von den örtlichen Gegebenheiten ab. Von Erfolg sind schon Tiefen von etwa 70 - 90 cm.

Besonders vorteilhaft läßt sich die Erfindung in Wasserschutzgebieten (mit und ohne Gülleausbringung), bei spezialisierten Gemüseanbaubetrieben und spezialisierten Weinbaubetrieben anwenden. Ferner sind auch landwirtschaftliche Betriebe mit Gülleaufkommen zu nennen, die auf den Anbau von Zwischenfrüchten verzichten wollen oder solche überhaupt nicht anbauen können.

In jedem Fall kommt der Vorteil der Erfindung zum Tragen, mit Rindenmulch oder einem Rindenmulchgemisch bestimmte Mengen Stickstoff, insbesondere aus Gülleabgaben, zu absorbieren und mineralisierten Stickstoff, der sich im Stickstoffkreislauf befindet, organisch zu binden.

Mit dem Rindenmulch wird also ein Auffangpotential für beispielsweise durch Gülledüngung eingebrachten bzw. für durch Pflanzen nicht verbrauchten Stickstoff geschaffen. Durch die Stickstoffarmut des Rindenmulches wird erreicht, daß die das Rindenmulch zersetzenden Mikroorganismen mineralisierten Stickstoff sehr stark immobilisieren, und durch die in der wachstumsfreien Zeit herrschenden Witterungsbedingungen mit niedrigen Temperaturen tritt ein weitestgehender Stillstand im Stickstoffkreislauf ein.

Zur Erhöhung der mechanischen Festigkeit des in Fig. 3 dargestellten Gehweges 22 kann dem Rindenmulch selbst bzw. dem Rindenmulchgemisch in vorteilhafter Weise noch Schlacke in Form von Granulat beigemischt werden, wobei sich Korngrößen von 36 mm - 70 mm als empfehlenswert gezeigt haben. Durch die Schlacke wird erreicht, daß der Gehweg 22 hinreichend stabil ist und den auftretenden Belastungen standhalten kann, ohne daß die mit der Erfindung angestrebte Bindung von Nitrat in der wachstumsfreien Periode durch den Rindenmulch behindert wird.

**Patentansprüche**

1. Verwendung von Rindenmulch (12, 14, 16), welches in den Erdboden (10) zur Verminderung des Nitratgehalts im Grund- und Trinkwasser oder Oberflächenwasser durch Reduzierung der Stickstoff (N)-Auswaschung und

    a) zur Speicherung des Stickstoffs aufgrund der Immobilisationswirkung des Rindenmulches in der wachstumsfreien Zeit der Pflanzen, und

    b) um den Stickstoff nach Ende der wachstumsfreien Zeit wieder zur Verfügung zu stellen.

    eingebracht wird.

2. Verwendung nach Anspruch 1, dadurch gekennzeichnet, daß der Rindenmulch in Form einer waagerechten Schicht in den Erdboden eingebracht wird.

3. Verwendung nach Anspruch 1, dadurch gekennzeichnet, daß der Rindenmulch in Form einer sich etwa senkrecht in den Erdboden erstreckenden Schicht eingebracht wird.

4. Verwendung nach einem der vorhergehenden Ansprüche 1 - 3, dadurch gekennzeichnet, daß Rindenmulch in den Korngrößen von kleiner als 20 mm verwendet wird.

5. Verwendung nach einem der vorhergehenden Ansprüche 1-4, dadurch gekennzeichnet, daß das Rindenmulchgemisch durch Rindenmulch unter Zugabe von etwa 5 % - 10 % Tongranulat gebildet wird.

6. Verwendung nach Anspruch 1-4, dadurch gekennzeichnet, daß das Rindenmulchgemisch durch Rindenmulch unter Zugabe von etwa 5 % - 10 % einer offenporigen Substanz, vorzugsweise Lava, gebildet wird.

7. Verwendung nach Anspruch 1- 4, dadurch gekennzeichnet, daß das Rindenmulchgemisch durch Rindenmulch unter Zugabe sowohl von etwa 5 % - 10 % Tongranulat als auch von 5 % - 10 % Lava gebildet wird.

## Claims

1. Use of bark mulch (12, 14, 16), which is introduced into the soil (10), for reducing the nitrate content in the ground water and drinking water or surface water by reducing the leeching out of nitrogen (N) and
   a) for storing the nitrogen by the immobilisation effect of the bark mulch during the no-growth season of the plants, and
   b) for making the nitrogen available again after the end of the no-growth season.

2. Use according to Claims 1, characterized in that the bark mulch is introduced into the soil in the form of a horizontal layer.

3. Use according to Claim 1, characterized in that the bark mulch is introduced in the form of a layer extending generally perpendicularly into the soil.

4. Use according to one of the preceding Claims 1 to 3, characterized in that bark mulch is used in particle sizes smaller than 26 mm.

5. Use according to one of the preceding Claims 1 to 4, characterized in that bark mulch mixture is formed by bark mulch with an admixture of about 5 to 10% clay granulate.

6. Use according to Claims 1 to 4, characterized in that the bark mulch mixture is formed by bark mulch with an admixture of about 5 to 10% of an open-pore substance, preferably lava.

7. Use according to Claims 1 to 4, characterized in that the bark mulch mixture is formed by bark mulch with an admixture both of about 5 to 10% clay granulate and also of about 5 to 10% lava.

## Revendications

1. Utilisation de litière d'écorce (12, 14, 16) qui est apportée dans le sol (10) pour réduire la teneur en nitrate dans les eaux souterraines, l'eau potable et l'eau de surface par réduction du lavage de l'azote (N) et
   a) pour l'accumulation de l'azote résultant de l'effet d'immobilisation de la litière d'écorce en temps exempt de croissance des plantes, et
   b) pour rendre à nouveau disponible l'azote vers la fin du temps exempt de croissance.

2. Utilisation suivant la revendication 1, caractérisé en ce que la litiére d'écorce est apportée sous le forme d'une couche horizontale dans le sol.

3. Utilisation suivant la revendication 1 caractérisé en ce que la litiére d'écorce est apportée sous la forme d'une couche qui est à peu près verticale dans le sol.

4. Utilisation suivant l'une des revendications 1 à 3, caractérisé en ce que la litiére d'écorce est utilisée avec une granulométrie inférieure à 20 mm.

5. Utilisation suivant l'une des revendications 1 à 4, caractérisé en ce que le mélange de litiére d'écorce est formé par de la litiére d'écorce sous addition d'environ 5 à 10 % de granulat d'argile.

6. Utilisation suivant la revendication 1 à 5, caractérisé en ce que le mélange de litiére d'écorce est formé par de la litiére d'écorce sous addition d'environ 5 à 10 % de substance à pores ouverts, de préférence de la lave.

7. Utilisation suivant la revendication 1 à 4, caractérisé en ce que le mélange de litiére d'écorce est formé par de la litiére d'écorce sous addition d'aussi bien environ 5 à 10 % de granulat d'argile que de 5 à 10 % de lave.

10

12

10

**Fig. 1**

**Fig. 2**

18  14  20

**Fig. 3**

22  16  20

16

10